# EUROPEAN PATENT SPECIFICATION

(11) **EP 4 207 713 B1**
(45) Date of publication and mention of the grant of the patent: **06.05.2026**
(21) Application number: 23150027.3
(22) Date of filing: 02.01.2023
(51) Int. Cl.: G06F 11/32, G06F 21/62, G06F 11/30, G06F 11/34

(54) **METHOD AND SYSTEM FOR EVENT BASED, PRIVACY AWARE CAPTURING OF PARTIAL SCREEN CHANGES FOR DEVICES WITH RESTRICTED RESOURCES**
VERFAHREN UND SYSTEM ZUR EREIGNISBASIERTEN, DATENSCHUTZBEWUSSTEN ERFASSUNG VON PARTIELLEN BILDSCHIRMÄNDERUNGEN FÜR VORRICHTUNGEN MIT EINGESCHRÄNKTEN RESSOURCEN
PROCÉDÉ ET SYSTÈME DE CAPTURE, SENSIBLE À LA CONFIDENTIALITÉ, BASÉE SUR DES ÉVÉNEMENTS, DE CHANGEMENTS D'ÉCRAN PARTIELS POUR DES DISPOSITIFS À RESSOURCES RESTREINTES

(30) Priority: 03.01.2022 US 202263296150 P; 27.12.2022 US 202218089311
(43) Date of publication of application: 05.07.2023
(73) Proprietor: Dynatrace LLC, Boston, Massachusetts 02210 (US)
(72) Inventor: Pereiro Parejo, Delfin, 4020 Linz (AT); Criado, Lluis, 4020 Linz (AT); Munoz, Carlos, 4020 Linz (AT)
(74) Representative: Bittner, Thomas L.

(56) References cited:
- US-A1- 2009 006 966
- US-A1- 2016 055 712
- US-A1- 2017 019 489
- US-A1- 2018 049 023
- US-A1- 2018 173 375
- US-A1- 2019 171 542
- US-A1- 2021 141 652
- US-B1- 10 936 807

## Description

The invention generally relates to the field of reconstructing user interactions with an application executing on a mobile device.

### Background

Native mobile applications gained importance in the last years and became an important interaction channel with end-users and they also became an important revenue channel. This raised the importance of monitoring capabilities for this type of application. Knowledge of real-time functional and performance status data for individual instances of native mobile applications, as operated on mobile devices of end-users is inevitable to judge the operation status of those applications and to identify malfunctions and to execute appropriate countermeasures if required.

Next to this standard monitoring requirements, also insight into interaction patterns of end-users with monitored applications is required. The desired level of visibility includes monitoring data for the replay or simulation of observed user interactions, including the reconstruction of the user interface of the monitored application as it was perceived by the end-user.

This user interaction replay, or session recording data may be used to identify common, frequent user behavior, which may in turn be used to optimize the user-interface of the monitored applications. In addition, this data may be used to identify the cause of observed undesired application behavior, like unexpected performance degradations or application crashes. Especially user session data may be of interest that describes the user interaction sequence that happened before those undesired behavior occurred. This captured user interaction data may then be analyzed to identify user activities that may have led to the undesired behavior.

Privacy protection rules, like the General Data Protection Regulations (GDPR), require monitoring systems that also observe user interaction data that may contain sensitive, private data, to identify such sensitive private data and to remove it from monitoring data before it is stored, processed, analyzed, or viewed.

Mobile applications are typically executed on mobile devices which have limited computing, storage, and communication resources. Additional requirements for monitoring systems arise from those circumstances, like a small memory footprint with a guaranteed maximal storage space on the device or minimized network communication activity that is adapted to and optimized for the network connection currently used by the mobile device.

State of the art user interaction systems for mobile devices use video capturing systems for user interactions that capture screen shots with a fixed capture rate and perform on-the-fly compression of captured monitoring data. Although those conventional approaches are easy to implement and to deploy, as they typically do not require knowledge or modifications of the interna of the monitored applications, they show some considerable shortcomings.

First, as capturing is performed at a fixed rate, the created monitoring data may show large sequences of inactivity, and as capturing is performed at a fixed rate which is independent of activities related to the monitored application, monitoring data may not contain important user interaction activity that happened between screen captures.

Second, the on-the-fly compression creates a storage form in which individual user interaction data is not identifiable without decompression and replay of the created movie. This makes it extremely difficult to identify and mask private user data properly.

Given those shortcomings there is demand in the field for a user interaction monitoring system that matches the requirements of mobile environments or environments with limited resources and that also supports efficient protection of private end-user data.

US 2019/1715421 A1 discloses a system and method for the real-user capable monitoring of the rendering process of dynamically updated web pages. The proposed approach deploys a browser agent to content loaded and displayed by a web browser which monitors resource load activities caused by the processing of the content by the browser and in-place content modifications cause by the executions of scripts and XHR communication by the browser. Those resource load and content modification activities affecting the visible area of the browser are identified and a point in time is calculated at which the visualization of the content for the visible area is complete. Further performance monitoring data describing the performance of the rendering process depending on the percentage of finished portions of the visible area over time is calculated. In addition, data describing the rendering process in detail may be captured by the browser agent which may be used for a later playback of the rendering process.

US 2017/019489 A1 discloses methods for recording a session of user interaction with a website for subsequent replay. The methods comprises the steps of receiving in the memory a webpage from the website, creating a queue of items 2with the processor, and storing the queue in the memory. Each item corresponds to an element of the webpage that is to be monitored for changes and comprises data entries corresponding to the current state of each of a plurality of properties for the respective element. A method of recreating a session of user interaction with a website is also provided, which involves processing batches of data generated as a result of recording a session of user interaction with a website.

US 2018/173375 A1 discloses methods, systems, and apparatus for evaluating interactions with a user interface. In one aspect, a method includes identifying a set of mutation events specifying changes to the structure of a user interface that occurred during the user session, and generating user interface states specifying different structures of the user interface throughout the given user session . Based at least in part on the user interface states, playback data that present visual changes of the user interface corresponding to the set of mutation events that occurred during the user session are generated. Session activity data describing user interactions that occurred during the user session are also generated At least a portion of the playback data and the session activity data are output to a requesting device.

US 10,936,807 B1 discloses various embodiments related to identifying changed regions in user interfaces or other products of compiled code. Some embodiments include training a neural network to identify changed regions in a user interface by providing identified code changes to the neural network, receiving, from the neural network, a plurality of regions of a user interface predicted to be affected by the identified changes, and providing feedback to the neural network evaluating the plurality of predictions. Some embodiments include providing a trained neural network with an identified change in code for a user interface, receiving, from the trained neural network, an indicated region of the user interface predicted to be affected by the identified change, and outputting a visual representation of the indicated region of the user interface.

US 2018/049023 A1 discloses systems and methods for real-time, remote-control of mobile applications. A communication session between a network device and a terminal device can be established. The network device can be configured to execute a mobile application. For example, the mobile application can include an input element at an initial state. The mobile application can be remotely controlled by the terminal device. Further, a data stream including content data can be received and transmitted during the communication session. For example, the content data can include an object presented by the mobile application. The content data can be displayed on the terminal device. An input event associated with the content data can be detected. Control data can be generated based on the detected input event. The control data can be received at the network device and the initial state of the input element can be modified.

US 2021/141652 A1 discloses: A first interface having a first control object and a second control object is executed, where the first control object is associated with a value, a label, and a digital image. The first control object in engaged. The second control object is engaged to execute a second interface. That the second interface includes an occurrence of the label is identified. Locations of the label and the digital image in the first interface and the occurrence of the value in the second interface are determined. Integration code is generated based on the locations. The integration code is provided to the device to cause, as a result of execution of the integration code by a device, the device to display data obtained based on the locations.

This section provides background information related to the present disclosure which is not necessarily prior art.

### Summary

This section provides a general summary of the disclosure, and is not a comprehensive disclosure of its full scope or all of its features. The invention is set out in the appended set of claims.

This disclosure is related to concepts and technologies for the efficient and user-privacy protection ready generation of user interaction monitoring data for the reconstruction of individual user interaction sequences or sessions on mobile devices or devices with limited resources.

Monitored applications are instrumented with agents and sensors, where sensors detect various types of events that may also cause changes of the user interface and agents receive data describing those events, identify portions of the user interface that were affected/changed by those events and perform a temporally focused and storage-cost optimized capturing of the affected screen regions. Data describing observed events and corresponding captured user interface changes may be linked to create user interface monitoring data that also contains semantic information about observed user interface changes in form of data describing the events that caused those user interface changes.

Variant embodiments may capture and use user interface structure data, like data structures describing a hierarchical segmentation of screen areas and use this data structures to identify sections of a device display that are affected/targeted by observed events for a change focused capturing of display data. Those variants may in addition use this captured user interface structure data in combination with visibility/focus status data of user interface elements, screen size and user interface element position and size data to determine whether user interface elements affected/changed by an observed event are currently visible on a device screen, as only changes of currently visible elements need to be captured by the monitoring system.

Other embodiments may maintain privacy configuration data to identify user interface elements that contain private user data. Such configuration data may contain names or other identifiers of user interaction elements containing private data, types of display elements that typically contain private user data or a combination of both. Such privacy configuration data may also specify that all displayed data is be considered private.

Variant embodiments may combine captured hierarchical user interface structure data and data identifying user interface elements containing private user data to further improve the efficiency of the user interface data capturing process. Those embodiments may on occurrence of an event corresponding to a user interface element having a parent user interface element that is identified as containing private data, stop the capturing process, as the user interface element on which the event occurred is embedded in a user interface element containing private data and accordingly needs to be excepted from screen data capturing. Only timing, type and other descriptive data of the event and size and position of the affected user interface element may be captured in this situation, but no actual screen content. On occurrence of an event on a not private user interface element, screen data may be captured, and the captured hierarchical user interface structure data may be used to search for direct and indirect, private data containing child elements of user interface element on which the event occurred, to correctly mask captured private data.

Yet other embodiments may maintain session recording data describing observed events and screenshot data containing display data of affected user interface regions separately and link data describing events with corresponding screenshot data using foreign key mechanisms. These embodiments may further decrease the device-side memory footprint of the monitoring system by identifying duplicated screen capture data and refer different observed events that produced identical screen capture data to the same stored screen capture record.

Further areas of applicability will become apparent from the description provided herein. The description and specific examples in this summary are intended for purposes of illustration only and are not intended to limit the scope of the present disclosure.

### Drawings

The drawings described herein are for illustrative purposes only of selected embodiments and not all possible implementations, and are not intended to limit the scope of the present disclosure.
- Fig. 1: provides a block diagram of a monitoring system directed to create user interaction session monitoring data for monitored applications executed on mobile devices or devices with limited resources.
- Fig. 2: shows data records that may be used to describe structures of user interfaces, observed events that correspond to user interface elements, and data records to store session recording, partial screenshot, and privacy configuration data.
- Fig. 3: visually describes the event triggered, partial screenshot capturing process, including the evaluation of privacy configuration data and corresponding masking of captured screenshot regions containing private user data.
- Fig. 4: conceptually describes the processing of observed events to identify affected user interface regions, capture display data for those regions and mask portions of the captured display data according to privacy configuration data.
- Fig. 5: provides flow charts executed by an agent injected into a monitored application to create new user interaction session records on recording start and to send captured user interaction session data to an external monitoring server on occurrence of certain events.
- Fig. 6: depicts a process that may be used to keep the storage size required for device-side session monitoring data below a certain threshold.
- Fig. 7: shows the receipt of session recording data by a monitoring server.
- Fig. 8: describes the process of preparing the presentation of recorded session data.
- Fig. 9: shows the process of replaying a recorded session.
- Fig. 10: provides the flow chart of a process to navigate to a specific event in a recorded session.
- Fig. 11: shows a screenshot of an exemplary user interface to replay recorded session data.
- Fig. 12: provides a screenshot of an exemplary user interface to present and navigate events of a recorded session in form of a list.

Corresponding reference numerals indicate corresponding parts throughout the several views of the drawings.

### Detailed description

Example embodiments will now be described more fully with reference to the accompanying drawings.

Next to desktop or mobile browser-based application interfaces, native mobile applications or "mobile Apps" represent a high volume and valuable user interaction variant for most application vendors. Other than desktop browser-based interfaces, they are also available on mobile devices and other than mobile browser-based interfaces, they are perfectly tailored to type and brand of the used mobile device.

Therefore, visibility into the actual interaction of users with those native mobile applications has become crucial to identify optimization potential of user interaction designs or to detect root causes or preconditions for user annoying events, like performance degradations or application crashes.

Other than browser-based interfaces (both desktop and mobile), native mobile applications do not provide more or less standardized interfaces in form of an enclosing browser application which can be used to interact with a monitored application or to gather monitoring data in desired granularities.

Monitoring of native mobile applications typically requires the injection of an agent into those applications and further the instrumentation of neuralgic/interesting code portions with sensor code that detects the execution of those code portions and reports those executions together with additional data describing those executions.

For the creation of monitoring data describing the interaction of users with the monitored application, those sensors need to detect and report events or code executions that change the displayed user interface, and agents may then identify, capture and store affected user interface regions.

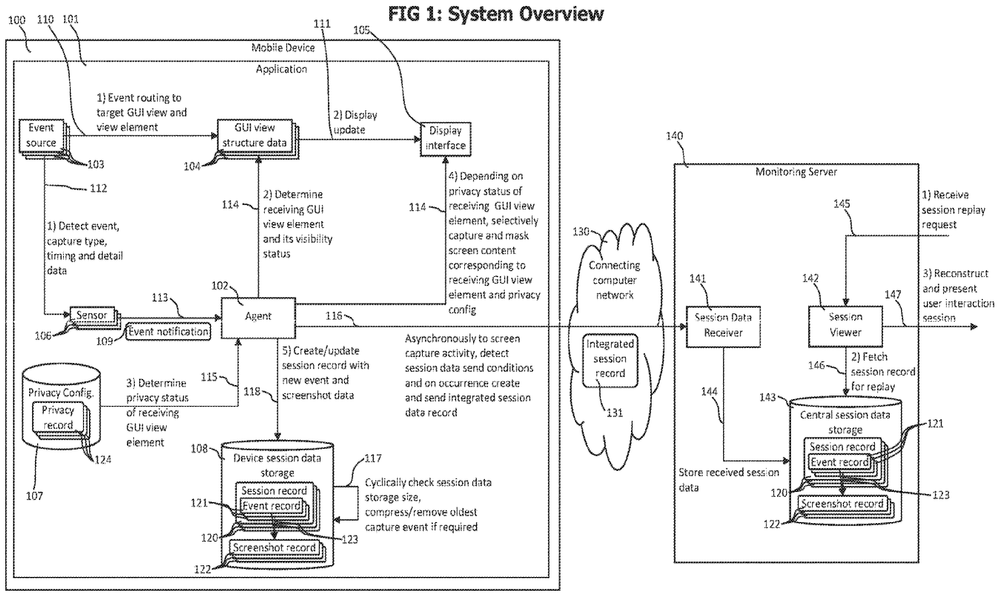

Coming now to Fig. 1, which provides an overview of a monitoring system capable to record user interaction sessions performed with native applications operating on a mobile device.

A mobile device 100 executes a native mobile application 101. An agent 102 is deployed to the mobile application and sensors 106 are instrumented to code of the mobile application that monitor event sources 103 of various types to detect 112 occurring events. Exemplary event sources are touch interactions with components of the mobile device, like touch screen, fingerprint sensor etc., status changes of the device, like change of connectivity status, battery status, status data indicating the sending or receipt of network data, orientation change of the mobile device and the like. Sensors 102 may detect 112 events and capture data for the type of the event, the timing of the event and additional detail data for the event. Such event detail data may include for an event indicating the entry of text via a virtual keyboard of the device, the entered character sequence. The event data is forwarded 113 to the agent 102 in form of event notification records 109.

Occurred events also trigger some activity of the monitored application, which may lead to changes of portions of the graphical user interface (GUI) of the application. Business logic of the application may route 110 the events to corresponding GUI view structure data 104, which defines layout, structure, and look of the GUI of the application. Those events may then cause updates 111 of the GUI on the device display interface. As an example, a touch event may be recognized on a specific location of the display of the mobile device. The application logic may receive this touch event and use the GUI element structure data 104 to identify the GUI element which is currently displayed on the device screen on the location of the received touch event. The so selected GUI element may then change its visualization to represent the received touch event. As an example, a "button" GUI element may toggle its state from "selected" to "unselected" or vice versa and update 111 the display 105 accordingly.

On receipt of the event notification 109, the agent may access and analyze the GUI view structure data 104, to identify the GUI element that received the event. The agent may further determine whether the receiving GUI element is currently visible on the device screen (as an example, an event indicating a status change of the device may be routed to a GUI element that is currently not visible) and in case it is visible, it may determine the area of the device display that is covered by the GUI element.

Afterwards, the agent 102 may access 115 privacy configuration records 124 stored in a privacy configuration repository 107 to determine whether the receiving GUI element contains personal user data and therefore should not be captured. The agent may also determine if only portions of the affected GUI element contain personal or private data and adapt the capturing of screen data accordingly.

The display content of the area covered by the affected GUI element is then captured according to the previously determined privacy status and stored in a session data storage 108 in form of event records 121 and screenshot records 122. Session records 121 typically represent a recorded user interaction sequence and the event records 121 of a session record represent the events that occurred during this interaction sequence. Screenshot records 122 store screenshot data that was recorded for observed events and a screen shot record is linked 123 with the event record 121 for which it was recorded. Some events may cause no screen changes or may cause the creation of screen content that was already captured. In this case, already captured screenshot records are reused and linked with those events, to save storage space on the device.

The agent 102 may cyclically check 117 the storage size of the device session data storage 108, and in case this size exceeds a certain threshold try to compress the session data, e.g., by combining screenshot record if possible, or by identifying and removing the oldest event records and screenshot records from the storage.

In parallel to receiving events that change the user interface of the monitored application, the agent may also receive 116 events that indicate that sending of the session data is required. Such events may indicate an unexpected/undesired condition of the application, like an unexpected performance degradation or a crash of the monitored application. On detection of such a session data sending condition, the agent may create an integrated session record 131, which contains all event record and screenshot record data for the recorded session. The integrated session record 131 may then be sent via a connecting computer network 130 to a monitoring server 140. Privacy config 107 and device session data storage 108 may be stored in a persistent storage that is exclusively assigned and accessible by the monitored application, or it may be stored in a device global persistent storage of the mobile device in a way that it can be uniquely assigned to the monitored application.

In some embodiments, session data may only be sent in case of an application crash. Such embodiments may, for example, delete recorded session data as latest activity of an orderly shutdown of the application. Session recording data only survives when the application is not orderly closed due to an application crash. On application start, the agent may check whether session data is stored for the application (which remained from the last application run that ended with a crash) and then sends this session data to the monitoring data before deleting it from the device.

On the monitoring server, the integrated session record 131 may be received by a session data receiver 141, transformed into a session record 120 and separate screenshot records 122 and stored in a central session storage 143.

A session data viewer 142 may receive 145 session replay requests, fetch corresponding session records 120 for replay and reconstruct and present the recorded user action to a user of the monitoring system.

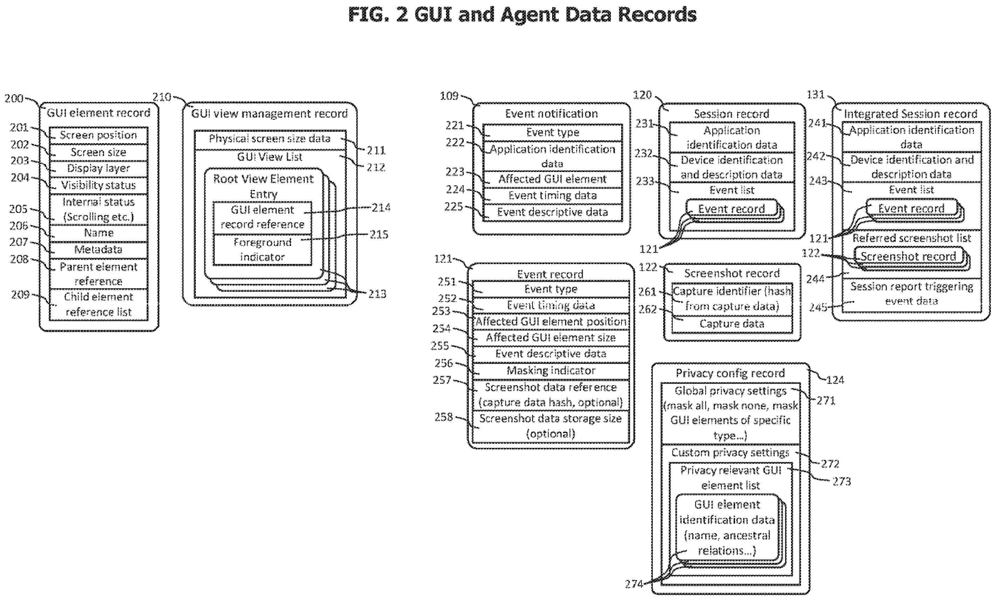

Data records that may be used to represent views of the GUI, GUI elements, event notifications, recorded sessions, screenshots, and privacy configuration are shown in Fig. 2.

GUI element records 200 and GUI view management records 210 conceptually describe data structures that may be used to store and maintain GUI structure data 104 by an application. Concrete implementations may differ for different operating systems (i.e., Apple iOS^{®}, Google Android^{®} or Microsoft Windows Phone^{®}), but the basic concepts, like a tree-shaped structure of GUI element records, where each element corresponds to or manages a typically rectangular portion of the user screen and where child elements of a given element manage sub portions of the screen portion assigned to the given element remain the same. The GUI of an application is typically divided into several views and a user may switch between those views. Those views may be defined and managed by GUI view management records or equivalent data types, and a GUI view management record may contain lists of reference to the root elements of GUI element trees.

A GUI element record 200, may contain but is not limited to screen position data 201, specifying the location of the screen area that is managed by the GUI element, screen size data 202, specifying the size of the managed screen area, display layer data 203 which may for overlapping sibling elements specify which of those elements is displayed above the other one, visibility status data 204, specifying whether the GUI element should be displayed on the screen, internal status data 205, like for GUI elements that manage more data than can be displayed at once, data describing the currently displayed portion of the managed data, a name or other identifying data 206, metadata 208 like the type of the GUI element (button, text, link, selection box...), a parent element reference 208 and a list of child element references 209. Parent element reference and child element references may be used to build easily and fast navigable tree structures of GUI element records.

GUI view management records 210 may contain data describing the physical size 211 of the device on which the application is running and a GUI view list 212, holding several root view element entries 213, which represent the views of the GUI of the application. A root view element entry 213 may contain but is not limited to a GUI element record reference 214, referring to a GUI element record 200 that forms the root element of a GUI element record tree, and a foreground indicator 215, to identify the GUI element view which is currently presented on the display of the device and receives user input.

Event notification records 109 may be created by sensors to describe and report observed events and may contain but are not limited to event type data 221, specifying the type of the observed event, like screen touch, text entry, orientation change etc., application identification data 222 identifying the monitored application in which the event was observed, affected GUI element identification data 223, identifying the GUI element record 200 which is affected by or handles the event, event timing data 224, describing e.g., the time when the event occurred and the duration of the event, and event descriptive data 225 containing additional data for the event, like for events indicating the entry of text, the list of entered characters.

Session records 120 may be used to store data describing individual monitored user interactions and may be stored on a mobile device during recording of the user interaction or on a monitoring server for analysis/replay of recorded user interactions. Session records 120 may contain but are not limited to an application identification data section 231, containing data to identify the monitored application for which the session recording was performed, device identification and description data 232, which may contain data to identify the (mobile) device on which the session recording occurred and data describing this device, e.g., in form of device vendor, type, version and type and version of the operating system running on the device. Further, session records may also contain an event list 233, which may contain a sequence of event records 121, where each event record may describe an event that was observed during the recording of the session in combination with captured screen data describing changes/updates of the GUI of the monitored application that were caused by the event.

Event records 121 describe events observed during the recording of a user session and may contain but are not limited to event type data 251 describing the type of the observed event (e.g., touch event on a specific screen location, text input event using a virtual keyboard provided by the monitored application, internal state change events of the device, like connectivity changes, battery status changes, orientation changes and the like), data describing the position 253 of a GUI element that was affected by the event and data describing the size 254 of the affected GUI element, which may be used during session replay to identify the screen area that was changed due to the recorded event, event descriptive data 255 for additional data describing the event, like entered text or data describing an observed state change, a masking indicator 256 to mark events that affected GUI elements that contain private user data which must not be captured, a screenshot data reference 257 identifying a screenshot record 122 containing captured screenshot data describing the change of the affected GUI element and a screenshot data storage size field 258 containing the memory size of the referred screenshot data. The screenshot data reference 257 may not be set for events with set masking indicator, as for such events screenshot data must not be captured. Some embodiments may use a not set screenshot data reference as indicator instead of a masking indicator to identify events that correspond to changes of private user data for which capturing of screenshot data is prohibited. The screenshot data storage size field 258 may be used by some embodiments to improve session data cleanup processes that are performed to control the amount of device memory used by session recording data. In case session recording data needs to be deleted to maintain storage size limits, the screenshot data storage size 258 may be used to keep track of deleted or to be deleted screenshot records without having to access those screenshot records to calculate their storage size.

Screenshot records 122 may be used to store captured GUI display data for GUI elements that are affected by an observed event. Screenshot records 122 may contain but are not limited to a capture identifier 261, which may be generated by applying a hash function on captured GUI data, and a capture data section 262 containing the captured screenshot data for the affected GUI element. Some embodiments may store screenshot records in form of individual files that reside in a file system that is accessible and managed by the monitored application, either exclusively or shared with other applications running on the mobile device. Those embodiments may set the file name of screenshot record files to the calculated capture identifier.

Privacy configuration records 124 may be used to define the capturing behavior of GUI change screenshot data with respect to private user data. A privacy configuration record may contain but is not limited to global privacy settings 271, which may set the capturing behavior to capture all or none GUI element changes or to capture/not capture GUI elements of a specific type (like text entry/display GUI elements) and a custom privacy settings section 272 which may contain a privacy relevant GUI element identification record list 273 to selectively identify GUI elements containing user private data.

A privacy relevant GUI element identification record list may contain a sequence of GUI element identification data records 274, which may contain data to identify individual GUI elements containing personal user data. Such GUI element identification data records may contain names of specific GUI element (e.g., "Birthday", "Name") and ancestral relationships of GUI elements (e.g., consider a field with name "Address" only as private if it is part of an enclosing "User data" GUI element).

Integrated session records 131 may be used to transfer session recording data from a monitored application to a monitoring server. For an efficient transfer of the monitoring data, it may be useful to create an integrated representation of the session recording data that contains both event records 121 describing events observed during the recording of the session and the screenshot records 122 that are referred by those event records.

Integrated session records 131 may contain but are not limited to application identification data 241, device identification and description data 242 and an event list 243, same as session records 120. They may contain in addition a referred screenshot list 244 containing all screenshot records 122 that are referred by event records 121 stored in the event list 243 and a session report triggering event data section 245 containing data describing the event (e.g., application crash) that caused the sending of the session record.

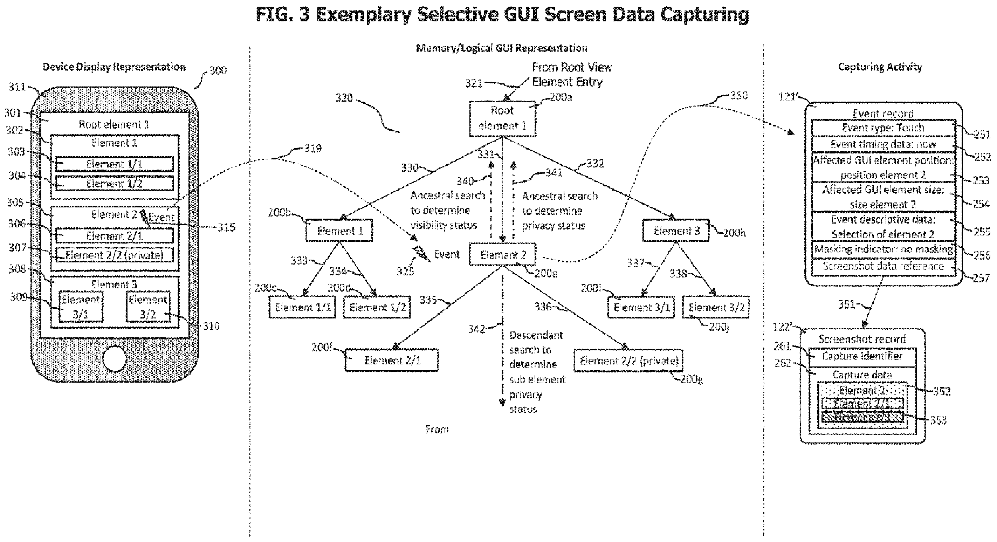

Fig. 3 visually shows the relations between observed events that change an element of the visual representation 300 of the GUI of an application, the analysis of GUI structure data 320 to determine visibility and privacy status of the changed GUI elements and the creation of corresponding event and screenshot records to describe the observed events and the GUI changes caused by them.

A mobile device 311 shows a GUI element view with root element 1 301 on its display. Root element 1 contains three child GUI elements element 1 302, element 2 305 and element 3 308. Element 1 again contains the two child elements element 1/1 303 and element 1/2 304, element 2 contains child elements element 2/1 306 and element 2/2 307, where element 2/2 may contain personal user data, like a user's name, a user's birthday, or the like. Element 3 308 contains child elements 3/1 309 and 3/2 310.

An event 315, like a touch event on the device screen, occurs on element 2.

The logical representation 320 of the GUI view currently displayed on the device screen is represented by a tree of GUI element records 200 referred 321 by a root view element 213 contained in the GUI view list 212 of a GUI view management record 210 (both not shown). The root view element 213 may have a foreground indicator 215 set to a value indicating that the GUI view is currently presented on the device screen.

Root view element 1 200a may cover the whole screen area and may refer (330, 331 and 332) the three child GUI element records element 1 200b, element 2 200e and element 3 200h. GUI element 1 200b may refer (333 and 334) the two child GUI elements element 1/1 200c and element 1/2 200d, GUI element 2 may refer (335 and 336) the two child GUI elements 2/1 200f and element 2/2 200g and GUI element 3 200h may refer (337 and 338) the two child elements element 3/1 200i and 3/2 200h. The GUI elements 200a to 200j may cover screen areas as shown in screen visualization 300 and screen position 201 and screen size 202 of the GUI elements may be set accordingly. Display layer data 203 of the GUI elements may be set in a way that child GUI elements are drawn over their respective parent GUI elements.

The agent 102 may receive a notification 109 for the occurred event 315 from a sensor 106 and access GUI view structure data for the currently visible view 320 to determine that GUI element 2 200e is affected by the observed event. The agent may first check the visibility status 204 of the affected GUI element to determine if it is currently displayed on the screen and a change of the GUI element would also change the screen content. A GUI element may not be visible if its visibility indicator is set accordingly or if the GUI element is situated on a location outside of the bounds of the device display. If the affected GUI element is visible, the agent may further perform an ancestral search 340 to determine the visibility status of the direct and indirect parent GUI elements of the affected GUI element. A GUI element that is itself visible may be embedded into a parent GUI element that is not visible. Therefore, it is required to analyze the visibility status of all parent GUI elements of an affected GUI element to determine whether it is currently visible. The ancestral search may also include a check of the foreground indicator 215 of the root view entry 213 representing the GUI view containing the affected GUI element. Only if the view of the affected GUI element is in the foreground and therefore visible, a change of the affected GUI element changes the screen content.

The agent may further use available privacy configuration data to determine whether the affected GUI element contains personal or private data and then perform an ancestral search 341 to determine the privacy status of the direct and indirect parent GUI elements of the affected GUI element. A GUI element may itself not be identified as containing private data, but one of its parent GUI elements may be marked as private. In this case, also the affected GUI element is considered as containing private data and its content is not captured.

If GUI element local and ancestral privacy check indicated that the capturing of screen content for the affected GUI element is permitted due to privacy configuration data, a descendant search 342 may be performed on the child GUI elements of the affected GUI element to identify those of its child GUI elements that contain private data and to adapt the captured screen content accordingly to not contain content from private child GUI elements.

As a result of receipt and processing of the event notification, the agent 102 may create an event record 121', with event type data 251 indicating the type of the occurred event (touch of a screen location), timing data 252 of the observed event, position 253 and size 254 data of the GUI element that was affected by the event (size and position extracted from GUI element 2 200e), event descriptive data 255 (in this case selection of GUI element 2), a masking indicator 256 indicating that the GUI element that is directly affected by the event is not masked, and a screenshot data reference 257 referring 351 the screenshot record 122' that was created for the observed event. It should be noted that in the described example the directly GUI element 200e which is directly affected by the event contains no private user data and is therefore not masked. Consequently, also the masking indicator is not set. Child element 2/2 200g of GUI element 200e is marked as containing private user data. Therefore, the capture data 262 that is created for the observed event is adapted to contain a masked representation of the screen content of element 2/2 200g (e.g., a black rectangle).

In addition to the event record 121', a screenshot record 122' is created with capture data containing the screen content 352 corresponding to the affected GUI element 200e, which also considers the privacy/masking status of the child elements, by replacing screen content corresponding to child elements containing private user data by masking content, like a black rectangle. In this case, the screen content 353 corresponding to GUI element 2/2 200g is masked because this GUI element is marked by the privacy configuration as containing private data. A hash value may be calculated from the capture data 262 and set as capture identifier 261 of the created screenshot record 122'. The value of this capture identifier may also be used for the screenshot data reference 257 of the corresponding event record 121'.

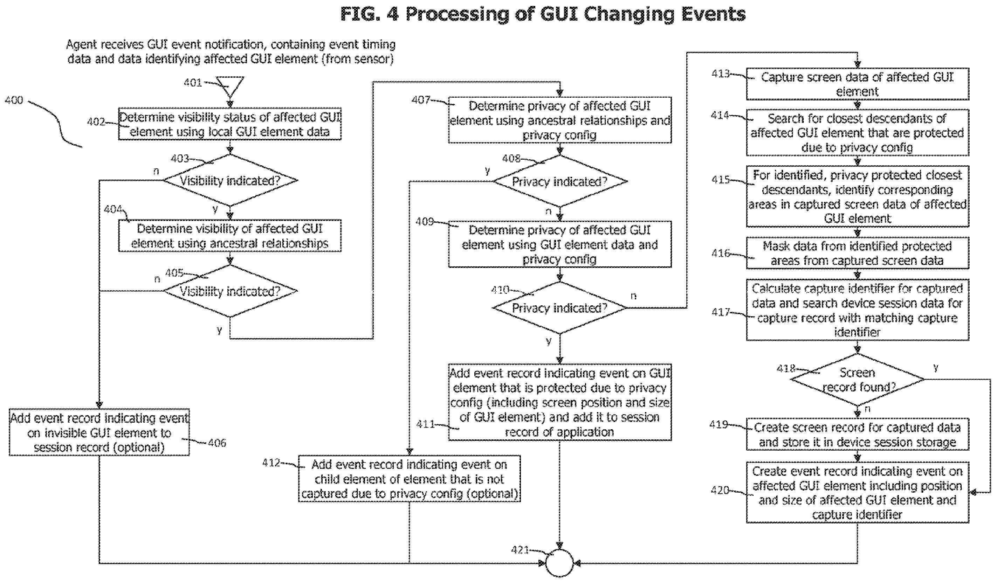

Fig. 4 provides the flowchart that describes the processing 400 of event notifications by the agent 102. The processing starts with step 401 when an event notification 109, containing event type, application identification data, identification data for a GUI element that is affected by the described event, event timing data and event descriptive data is received.

Following step 402 may then select the GUI element record 200 for the affected GUI element and then the visibility status and display location data to determine if the GUI element itself is visible. The GUI element may not be visible if its visibility status 204 indicates so, or if its screen position 201 indicates a display position that is outside of the device screen.

If step 402 determines that the affected element itself is not visible, decision step 403 continues with step 406, which may optionally create an event record indicating an event that affected a currently not visible GUI element and append the created event record to the event list 233 of the session record 120 for the currently ongoing session recording process. The process may then terminate with step 421. If otherwise step 402 determines that the affected GUI element is itself visible, step 404 may be executed which analyzes the ancestral GUI elements (direct and indirect parent GUI elements) to determine if those ancestral GUI elements indicate that the affected GUI element is not visible (as an example if the affected GUI elements is visible according to its visibility indicator, but the visibility indicator of one of its parent elements indicates no visibility, then the parent visibility status overwrites the visibility status of the affected GUI element). Step 404 may continue the ancestral visibility search until the first parent GUI element indicating no visibility is found and then terminate the ancestral search.

Following decision step 405 continues with step 406 if the result of the ancestral analysis indicated that the affected GUI element is not visible and with step 407 otherwise.

Step 407 uses available privacy conFiguration data 124 to determine whether the ancestral GUI elements of the affected GUI element are indicated to contain private user data. Step 407 may first check global privacy settings 271 to determine if screen content capturing is generally disallowed and indicate that the screen content for affected GUI element should not be captured this case. Otherwise, it may check whether screen capturing is disallowed for a specific type of GUI elements (e.g., GUI elements of type "enter text", "display text" or "display image") and the type of any one of the ancestral GUI elements of the affected GUI element matches one of those types. If either capturing is generally disallowed or one of the ancestral GUI elements of the affected GUI element matches one of the type-specific global privacy settings that disallow capturing of GUI content, step 407 may indicate that screen data for affected GUI element should not be captured due to the privacy status of its ancestral GUI elements. Otherwise, step 407 may continue and determine whether any one of the ancestral GUI elements of the affected GUI element matches any custom privacy settings 272. As an example, custom privacy settings may specify names or name patterns or other identification data for GUI elements containing private data. A match of any ancestral GUI element with any custom privacy setting indicates that screen content for the affected GUI element should not be captured due to the privacy state of its ancestral GUI elements. Accordingly, step 407 indicates that no screen content should be captured in this case.. Otherwise, step 407 may indicate that the privacy status of the ancestral GUI elements of affected GUI element does not indicate that the screen content corresponding to the affected GUI element contains private data. Step 407 may continue the ancestral privacy status search until the first parent GUI element indicating private data is found and then terminate the ancestral search.

Following decision step 408 continues the processing with step 412 if step 407 indicates that screen content for the affected GUI element cannot be captured due to the privacy status of one of its direct or indirect parent GUI elements. Step 412 may optionally create an event record that indicating that an event occurred on a GUI element for which screen content cannot be captured due to the privacy status of its parent GUI element and append the created event record to the event list 233 of the session record 120 for the currently ongoing session recording process. Capturing of screen content data for the affected GUI is suppressed in this case. The processing may then end with step 421. Otherwise, processing continues with step 409 which evaluates the privacy configuration for the affected GUI element itself to determine if it contains private user data. Decision step 410 may continue with step 411 if step 409 indicates that the affected GUI element contains private data and create an event record indicating an event on a GUI element for which screen content is not captured due to privacy settings. Step 411 may create an event record 121 using event type 251, position 253 and size 254 data of the affected GUI element, setting the masking indicator 256 to indicate masked screen data and setting the screenshot data reference 257 to indicate not available screenshot data. The created event record may then be appended to the event list 233 of the session record 120 for the currently ongoing session recording process. Capturing of screen content data for the affected GUI element is also suppressed in this case. The process then ends with step 421. If otherwise step 409 indicates that the affected GUI element does not contain private data, decision step 410 continues processing with step 413, which captures screen content data for the affected GUI element. Step 413 may e.g., use APIs provided by the operating system of the mobile device to access and read those areas of the graphics memory of the device that contain the display representation for the affected GUI element.

Following step 414 may then search descendant GUI elements (i.e., direct, and indirect child GUI elements) of the affected GUI element for GUI elements that are excluded from screen capturing due to the privacy configuration. Step 414 may perform a tree-search of the tree data structure that is represented by the affected GUI element and its direct and indirect child GUI elements. This search will stop searching tree branches if a child GUI element which is identified as containing private content is found in the tree branch. Continuing the search after a first private GUI element was found in a tree branch is not required, as all further, deeper nested GUI elements in the branch only further specify the content of a screen area for which it was already decided that it is not captured.

Step 415 may then determine the screen areas corresponding to the above identified closest descendant GUI elements of the affected GUI element that are excluded from screen capturing due to the privacy config and subsequent step 416 may mask the private screen areas identified by step 415 in the screen content of the affected GUI element that was captured by step 413. Step 416 may e.g., overwrite those areas with filled, black rectangles. The result of step 416 is an image of the screen area corresponding to the affected GUI element in which all portions that correspond to child GUI elements of the affected GUI element that contain private data are replaced by masking content (i.e., are blackened). Referring to element 262 "capture data" of Fig. 3, step 413 would have captured the portion of screen display data 352 corresponding to element 2 200e, steps 414 and 415 would have identified element 2/2 200g as child element containing private data and determined the screen content region corresponding to element 2/2 (region 353) and step 416 would then mark this region in the captured content.

Following step 417 may then calculate a capture identifier from the captured and masked screen content. Step 417 may e.g., use the data of the captured and masked screen content as input to some hash function which creates an identifier with sufficiently low collision probability (probability that two different images result in the same hash value). The calculated capture identifier may be used to query the device session data storage 108 for a screenshot record 122 with a capture identifier 261 that matches the calculated capture identifier. If no such screenshot record is found, decision step 418 continues with step 419 which creates a new screenshot record 122 using the captured and optionally mased content as capture data 262 and the calculated capture identifier as capture identifier 261 of the screenshot record. The created screenshot record is then stored in the device session data storage 108. Step 420 is executed after step 419. If a matching screenshot record is found, decisions step continues directly with step 420.

Step 420 then creates a new event record 121 and sets event type 251, timing 253 and event descriptive data 255 according to corresponding data received with the received event notification and set GUI element location 253 and size 254 data according to the screen location and size data of the affected GUI element. Step 420 may the set the screenshot data reference 257 to point to the screenshot record containing the screen capture data for the affected GUI element. Step 420 may e.g., set the screenshot data reference 257 to the capture identifier calculated by step 417.

The process then ends with step 421.

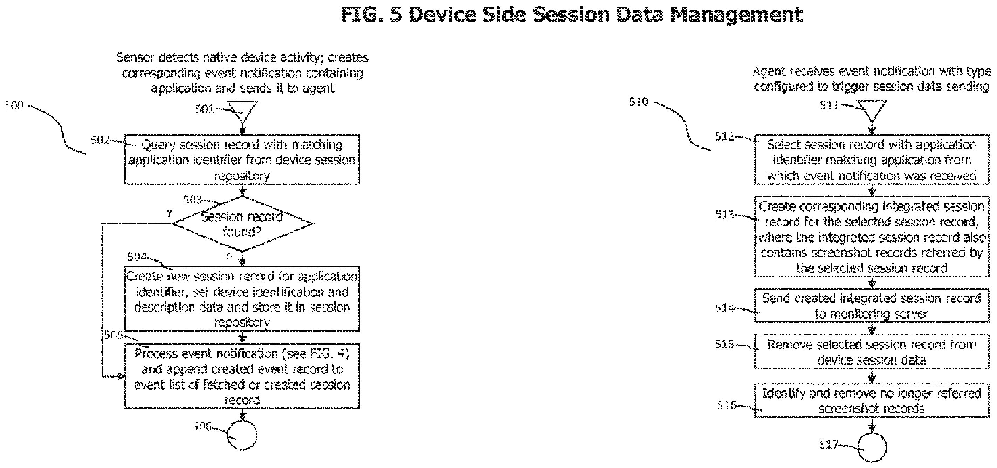

Coming now to Fig. 5, which shows flow charts of processes that describe the live cycle of session records 120 on the mobile device.

Process 500 describes the processing of native device activity by a sensor which corresponds to a potential change of the graphical user interface presented on the screen of the device. Such native activity may contain but are not limited to simple touch activities in which the user selects individual elements of the graphical user interface, text entry activities in which the user enters sequences of text into corresponding text-entry components of the user interface, those text entry activities may be aggregated by the monitoring sensor into one event notification representing the final text entry or scrolling activities, where the user may scroll through lists for which the list content does not fit into the display area assigned to the list. Also observed list scrolling activities the monitoring sensor may only report the end of the scrolling activity when the modified list is in a static state and displays the desired portion of the list content.

The process starts with step 501 when a sensor 106 detects such native device activity and creates a corresponding event notification 109 containing an event type 221, application identification data 222, a reference to or other identification data for an affected GUI element 223, event timing data 224 and additional descriptive data 225 for the event, like entered text. The sensor 106 may then send the created event notification 109 to the agent 102.

The agent may in following step 502 query the device session data storage 108 for a session record 120 with application identification data 231 that matches the application identification data 222 of the received event notification 109. Following decision step 503 may continue with step 504 if no matching session record is found, which creates a new session record using the received application identification data 222 of the received event notification and setting the device identification and description data with corresponding data retrieved from device data repositories. The created session record 120 may then be stored in the device session data storage 108 and the process continues with step 505. If a matching event record was found, decision step 503 may skip step 504 and switch directly to step 505.

Step 505 triggers the processing of the event notification as described in process 400 and appends the created event record 121 to the event list 233 of the created or fetched session record 120. The process then ends with step 506.

In some embodiments, session recording may be enabled or disabled via some application or device-wide monitoring configuration parameters. In such embodiments, a session record may be created when corresponding configuration parameters are set to enable session recording. If event notifications are received in such embodiments, they may be added to an already existing session record (if session recording is enabled) or discarded if no session record exists (i.e., when session recording is disabled).

Process 510 describes the processing of event notifications that indicate the sending of already recorded session records to a monitoring server.

The process starts with step 511 when the agent 102 receives an event notification with an event type that is configured to trigger the sending of recorded session data. Exemplary event types may include events that indicate the unorderly shutdown or crash of the application, events that indicate the interaction of the user with a support entity, like the filing of an issue report for the application, events indicating other error conditions of the monitored application. In addition, also or performance monitoring data for the monitored application that indicate undesired performance behavior may be identified and used to trigger the sending of recorded session data.

Following step 512 may then query the device session data storage 108 for a session record 120 with an application identifier 231 that matches the application identifier 222 of the received event notification 109. Following step 513 may then create an integrated session record 131 from the session record 120 selected in step 512. Step 513 may set application identification data 241, device identification and description data 242 and event list 243 of the created integrated session record with corresponding data from the selected session record 120. The referred screenshot list 244 may be set by selecting all screenshot records 122 that are referred by the events records 121 in the event list 243 of the integrated session record and copying the selected screenshot records to the referred screenshot list 244 of the created integrated session record. In addition, the session report triggering event data 245 section of the created integrated session record 131 may be set with data describing the event notification that triggered the session data sending.

Following step 514 may then send the created integrated session record to a monitoring server and step 515 may afterwards remove the selected session record 120 from the device session data storage 108.

Afterwards, step 516 may identify screenshot records 122 stored in the device session data storage that are now no longer referred by any event record and delete the identified, and now no longer required screenshot records. The process then ends with step 517.

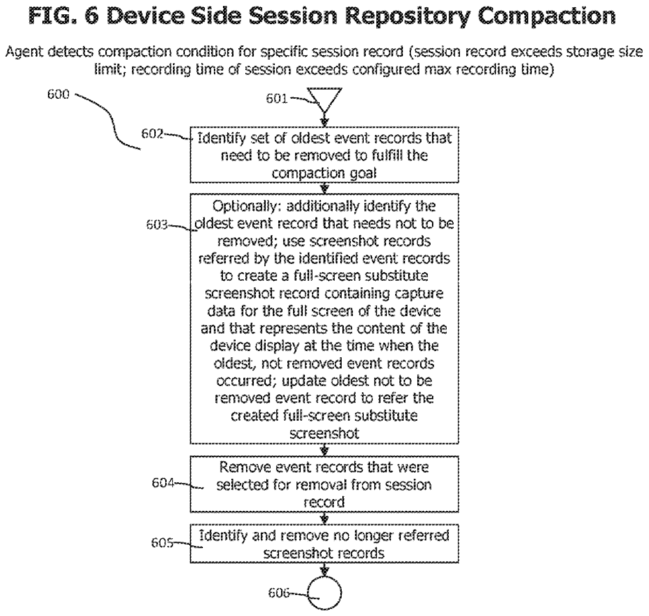

The cyclical compaction of the session recording data stored in the device session data storage to control the memory size of recorded session data is shown in Fig. 6. The process starts with step 601, when the agent detects a condition that indicates a required compaction of stored session recording data. Such conditions may include that the time period covered by currently stored session recording data exceeds a certain limit or that the amount of memory required on the device to store session recording exceeds a certain limit.

Following step 602 may then identify the set of oldest event records of event records that need to be removed to fulfill a compaction goal. Step 602 may e.g., start by selecting the eldest event record stored in a session record and then incrementally select the next oldest event records until the remaining, not selected event records fulfill a specific compaction goal, like a maximum covered session time period or a maximum storage space for session recording data. Some variants may continue selecting event records for removal until the remaining session recording data is below the compaction goal minus specific buffer. As an example, the maximum covered session time may be 1 minute, and step 602 may select event records for deletion until the remaining session data only covers a time of 50 seconds.

Optional step 603 may additionally select the oldest event record that should not be removed and then use the screenshot records of this and the to be removed event records to create a full-screen screenshot record that represents the screen content that was displayed when the oldest, not to be removed event record occurred. Step 603 may e.g., start with the screenshot record corresponding to the oldest, not to be removed event record and then combine it with screenshot record data from next older event records, until the complete screen area is covered. The so created full-screen screenshot record may then be used as screenshot record for the oldest, not to be removed event record. As the combination of screenshot records may require considerable resources on the mobile device, this step may be omitted by some embodiments.

Following step 604 may then remove the event records that were selected for removal by step 602 and subsequent step 605 may then identify and remove screenshot records 122 that are now no longer referred by any event record 121. The process then ends with step 605.

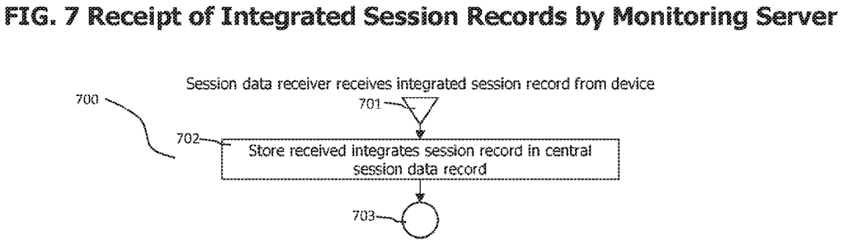

Fig. 7 shows the flow chart of a process 700 that describes the receipt of integrated session records 131 by a monitoring server 140. It is noteworthy that the number of recorded sessions widely exceeds the number of sessions that are actually viewed. Therefore, it is desired to minimize the processing performed during receipt of session recording data and to defer as much processing to the time when a session is selected for replay. To minimize the processing on receipt of session recording data, some embodiments may store received integrated session records 131 in a central session data repository 143. This approach reduces the processing during the receipt of session recording data because no analysis/restructuring of the data is required, but it may also increase the memory requirement on the monitoring server side, as duplicate screenshot records are not identified and eliminated.

The process starts with step 701 when a new integrated session record 131 is received by the monitoring server 140. Following step 702 stores the received integrated session record in the central session data storage 143, either in form of an integrated session record 131 as it was received, or by creating a corresponding session record 120 and separated screenshot records 122 to optimize storage usage on the monitoring server by identifying and eliminating duplicate screen records in trade for a slightly higher CPU footprint.

The process then ends with step 703.

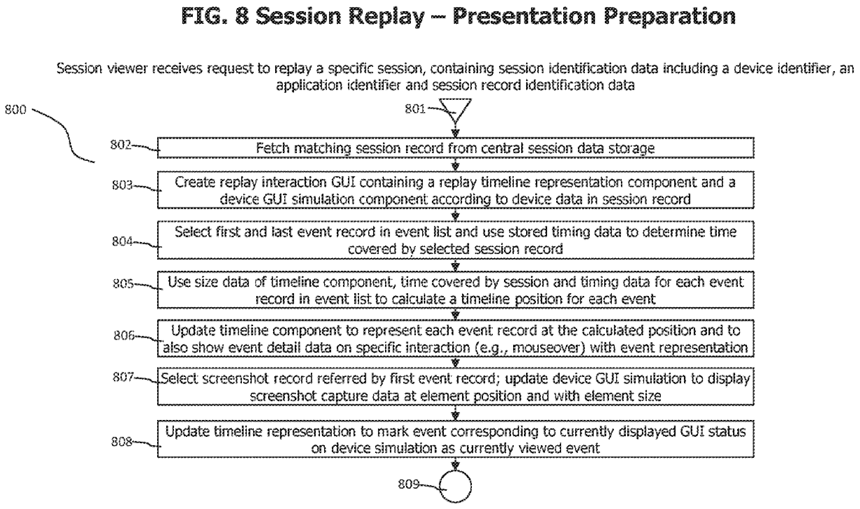

The process 800 of preparing session recording data for replay, either in form of a session record 120 and separate, referred screenshot records, or in form of an integrated session record 131 containing required screenshot records, is shown in Fig. 8.

The process starts with step 801, when the session viewer component 142 receives a request 145 to replay a specific session. The session replay request may contain data to identify the session record to replay, including a device identifier, an application identifier and other data required to uniquely identify a recorded session, like the session recording start time.

Following step 802 may then fetch the session record 120 identified in the session replay request from the central session data repository 143. Afterwards, step 803 may then create an interactive replay GUI for the replay of the selected session, containing a visual representation of the time period represented by the selected session in form of a timeline showing representations of event records contained in the session at positions on the timeline corresponding to the time of their occurrence, and a GUI simulation of the device on which the session was recorded for a most realistic reconstruction of the recorded user interaction session. Creation of the GUI simulation may use device description data 242 to create a GUI simulation that best matches the original device on which the session was recorded.

Following steps 804 and 805 may then place visualizations of event records contained in the session record on the timeline by first selecting the first and the last event record stored in the session record and then use the timing data of those events to determine the time period covered by the timeline in step 804. Step 805 may then use display size data of the timeline, the covered time period and the timing data of each event record to determine a position for the visualization of each event record on the timeline that is corresponds to the time when the respective events were recorded.

Step 806 may then update the timeline visualization by placing the event representations on the previously determined positions of the timeline. Step 806 may create the event visualizations in a way that event detail data may be presented on specific interactions with the event representations, like moving the mouse pointer over the event representations.

Following step 807 may then select the screenshot record referred by the first event record of the session record and update the device GUI simulation by displaying the screenshot capture data 262 at the element position 253 stored in the first event record, using the element size 254 also stored there.

Step 808 may then update the timeline visualization component by marking the representation of the first event record as currently selected and visualized by the device GUI simulation.

Interaction elements, similar to those of a Video recorder, like buttons to start/stop replay of the session may also be added to the session replay GUI.

The process then ends with step 809.

Some variant embodiments may also visualize the event 245 that triggered the reporting of the currently replayed session in the session replay GUI, as the session reporting trigger event typically describes an undesired state or behavior of the monitored application, like a crash of the application or an inacceptable slow or incorrect response of the monitored application. The recorded session data may be useful to identify causes for the observed undesired application state.

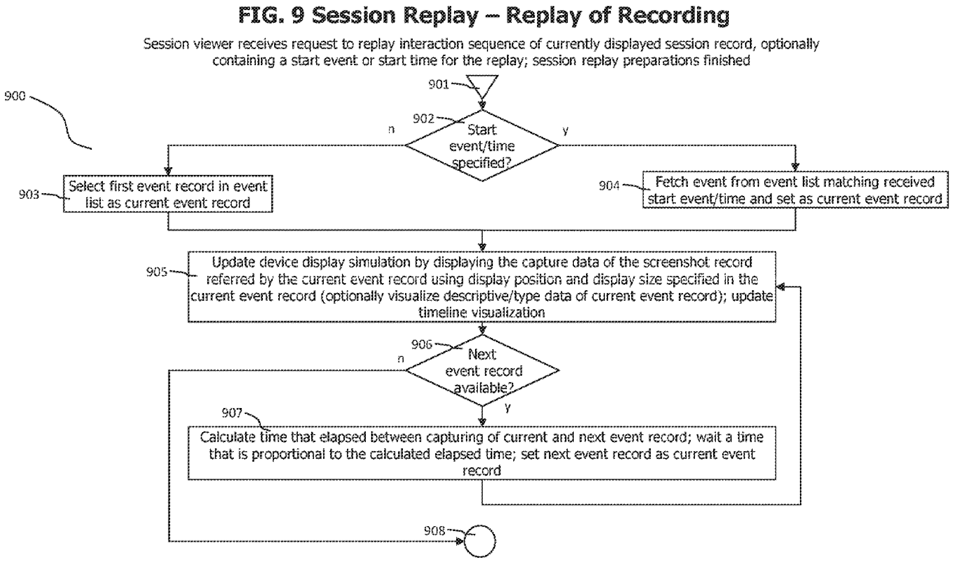

Fig. 9 describes the replay of a recorded session for which presentation preparations, as described in Fig. 8 have been performed and a corresponding session replay GUI is prepared and available. The process 900 may be started with step 901, when the session viewer component 142 receives a replay request. Such a replay request may be triggered when a user selects the "play" button of the replay GUI.

Following decision step 902 may analyze whether the replay request contains a start event or start time. A start event or time may be available if the user wishes to start the replay at a specific offset defined by a time or a selected event, instead of starting the replay at the beginning of the session recording. In case no start time is available, step 903 is executed which selects the first event record of the recorded session as current event record. Otherwise, step 904 is performed which selects the event record of the session record that matches the received start time or event record. If an event record from the session to replay is provided, then this event record is used current event record, if a start time is provided, then the event record of the session record that occurred next after the provided start time may be selected as current event record.

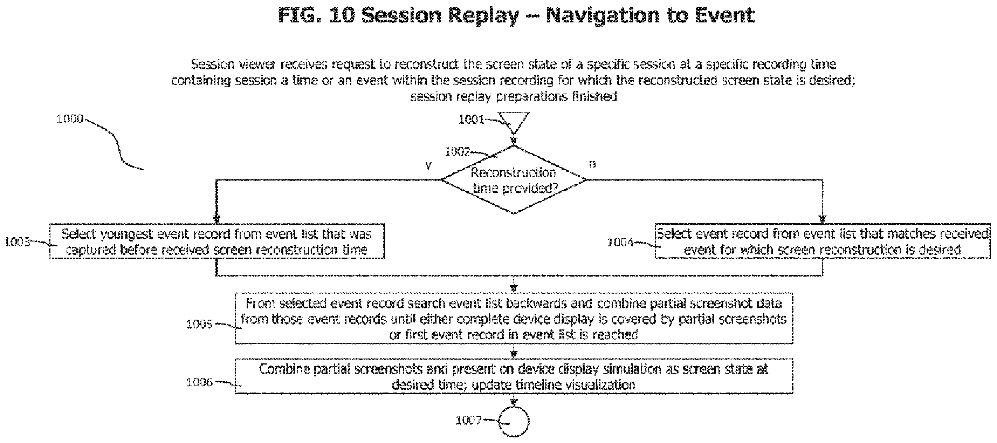

After step 903 or 904 the process continues with step 905, which uses updates the device GUI simulation by first selecting the screenshot record that is referred by the current event record and displaying its capture data 262 on the device GUI simulation on the position specified by the affected GUI element position 253 stored of the current event record 121 using the size specified in the affected GUI element size 254 field of the current event record. Step 905 may also update the timeline visualization to keep timeline and device GUI simulation consistent with each other. Step 905 may update the portion of the timeline visualization representing the current event record to indicate that it represents the current GUI status displayed by the device GUI simulation. Step 905 may additionally display descriptive data for the current event record, like type of the event or additional captured event data in the replay GUI. If the recording of the session starts with an offset from the capture start, and no full screen capture is available for the event record with which the replay should start, step 905 may also iterate over predecessors of the selected start event record and combine partial screen capture data of those predecessor events until capture data for the full screen is available, which may then be used to visualize the status of the device screen at the selected start of the session recording. See also Fig. 10 for a more detailed description of the process performed to combine partial screen capture data to create full screen capture data.

If the masking indicator 256 of the current event record is set, which indicates that no screenshot data was captured for the event due to privacy reasons, step 905 may use the affected GUI element size data 254 to create masked visualization data (e.g., a black rectangle) for the current event record and place the masked visualization data in the GUI simulation according to the affected GUI element position data 253 of the event record.

Following decision step 906 determines whether a next event record is available in the event list 233 of the currently processed session record is available after the current event record. If the current event record is the last one in the event list, the process ends with step 908. Otherwise, step 907 is executed which uses event timing data 252 of the current and the next event record to determine the time that elapsed between the occurrence of current and next event and then waits for a time period that is proportional to the elapsed time. Afterwards, step 906 may select the next event as current event and the process continues with step 905.

The process of navigating to a specific event record of a recorded session and corresponding update of the replay GUI is shown in Fig. 10.

The process 1000 starts with step 1001, when the session viewer component 142 receives a request to reconstruct the screen state of a session at a specific time. The time may be specified by referring to a specific event record contained in the session or by an offset time from the start of the session. Following decision step 1002 determines whether the reconstruction point is provided via a time offset or a selected event record.

Step 1003 is executed if an offset time is specified, which selects the event record from the event list with the latest occurrence time that is before the received offset time. Otherwise, step 1004 is executed which selects the event record specified in the reconstruction request.

Step 1005 is executed after step 1003 or 1004 starts from the selected event record to iterate backwards over event records in the event list by selecting screen capture data from screen records referred by the event records until either the full device screen is covered with screen capture data or the first event record in the event list reached. Various approaches may be used by step 1005 to determine whether the whole screen record is covered by capture screen data, a straight-forward, but not very efficient way would be to start with a white area of the size and shape of the device screen, then incrementally draw areas covered by screen capture data black and stop as soon as the whole area is black.

Following step 1006 may then combine the various captured screen portions into one image. Combining screen capture data may be performed in a way that when screen capture areas from different events overlap, the overlapping area is filled with screen capture data from the younger event. The combined screen capture image may then be displayed in the device simulator and the timeline visualization may be updated to indicate the selected event record as currently displayed event record. The process then ends with step 1007.

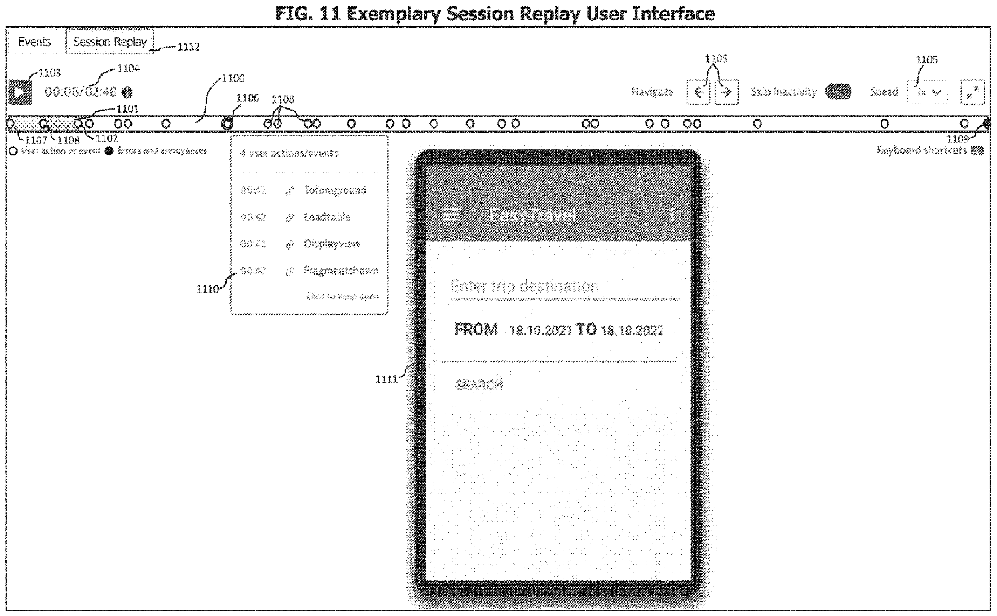

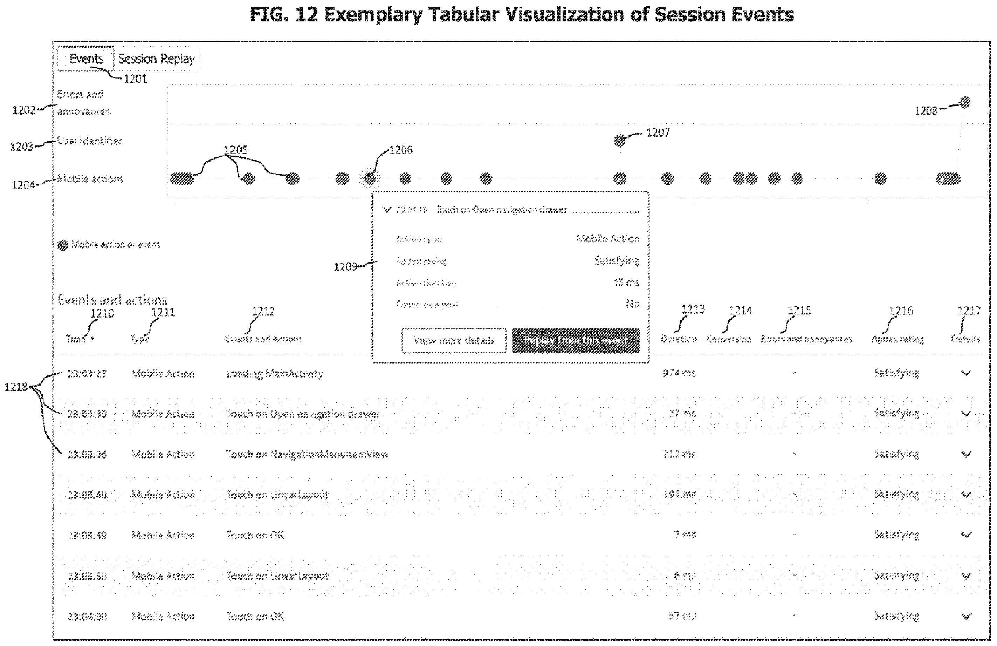

Coming now to Fig. 11 and 12, which provide screenshots of exemplary session replay related GUIs. Fig. 11 shows a user interface for the replay of captured user session data as experienced by the user that performed the recorded user interaction and Fig. 12 provides a list-based visualization of the events contained in a recorded user session.

The user interface shown in Fig. 11 contains a replay start/stop button 1103, timing information 1104 showing the that is currently displayed session time and the total time covered by the session, a timeline representation 1100 containing visualizations of all events contained in the session (e.g., 1107, 1108, 1102, 1106 and 1109 and others), where a color or display coding may be used to distinguish between unsuspicious evens 1107, 1108, 1106 and events that were erroneous or that caused an annoyance 1109. Further the event record 1107 that started the session recording and the event record that corresponds to the GUI state that is currently visualized by the device GUI simulator 1111 may be highlighted in the timeline. Optionally, a user may select an event 1106, e.g., by hoovering the mouse pointer of the timeline representation of the event to request display of additional detail data 1110 of the selected event..

The current elapsed time of an ongoing session replay may also be highlighted 1101, e.g., by using different colors for areas of the timeline representing already replayed portions of the session and areas representing yet to be replayed portions.

Navigation buttons 1105 may be used to instantly switch to a previous or next event, and a speed selection GUI component 1105 may be used to specify the speed of the replay. On selection of a navigation button, the device GUI simulator 1111 may be updated to represent the screen status of the event record which was the target of the navigation as described in Fig. 10.

The device GUI simulator 1111 may be updated each time session replay time passes another event as described in Fig. 9.

Fig. 12 provides an alternative representation of session recording data in form of a layered timeline representation, which provides different layers for events that caused errors or annoyances 1202, user identifier events 1201 and mobile actions 1204 to display corresponding events 1208, 1207, 1205 and 1206 in their corresponding layer. This timeline visualization may also allow to select a specific event 1206 to display event detail data 1209.

Next to the layered timeline representation, the user interface may contain a list that represents individual events 1218 by their occurrence time 1210, layer type 1211, event type 1212, event duration 1213, conversion information 1214 (to identify events that led to a commercial transaction like the purchase of goods), information about related errors or annoyances 1215, user satisfaction rating data 1216 like an Apdex rating, and a link to additional detail data 1217.

Users may change between both alternative session representation forms by using the two selection buttons 1112 and 1201.

The techniques described herein may be implemented by one or more computer programs executed by one or more processors. The computer programs include processor-executable instructions that are stored on a non-transitory tangible computer readable medium. The computer programs may also include stored data. Non-limiting examples of the non-transitory tangible computer readable medium are nonvolatile memory, magnetic storage, and optical storage.

Some portions of the above description present the techniques described herein in terms of algorithms and symbolic representations of operations on information. These algorithmic descriptions and representations are the means used by those skilled in the data processing arts to most effectively convey the substance of their work to others skilled in the art. These operations, while described functionally or logically, are understood to be implemented by computer programs. Furthermore, it has also proven convenient at times to refer to these arrangements of operations as modules or by functional names, without loss of generality.

Unless specifically stated otherwise as apparent from the above discussion, it is appreciated that throughout the description, discussions utilizing terms such as "processing" or "computing" or "calculating" or "determining" or "displaying" or the like, refer to the action and processes of a computer system, or similar electronic computing device, that manipulates and transforms data represented as physical (electronic) quantities within the computer system memories or registers or other such information storage, transmission or display devices.

Certain aspects of the described techniques include process steps and instructions described herein in the form of an algorithm. It should be noted that the described process steps and instructions could be embodied in software, firmware or hardware, and when embodied in software, could be downloaded to reside on and be operated from different platforms used by real time network operating systems.

The present disclosure also relates to an apparatus for performing the operations herein. This apparatus may be specially constructed for the required purposes, or it may comprise a computer selectively activated or reconfigured by a computer program stored on a computer readable medium that can be accessed by the computer. Such a computer program may be stored in a tangible computer readable storage medium, such as, but is not limited to, any type of disk including floppy disks, optical disks, CD-ROMs, magnetic-optical disks, read-only memories (ROMs), random access memories (RAMs), EPROMs, EEPROMs, magnetic or optical cards, application specific integrated circuits (ASICs), or any type of media suitable for storing electronic instructions, and each coupled to a computer system bus. Furthermore, the computers referred to in the specification may include a single processor or may be architectures employing multiple processor designs for increased computing capability.

The algorithms and operations presented herein are not inherently related to any particular computer or other apparatus. Various systems may also be used with programs in accordance with the teachings herein, or it may prove convenient to construct more specialized apparatuses to perform the required method steps. The required structure for a variety of these systems will be apparent to those of skill in the art, along with equivalent variations. In addition, the present disclosure is not described with reference to any particular programming language. It is appreciated that a variety of programming languages may be used to implement the teachings of the present disclosure as described herein.

According to the present disclosure, a computer-implemented method for reconstructing user interactions with an application executing on a mobile device is provided. The method may comprise receiving, by an agent, an event notification for an event observed by an application, where the event notification includes an identifier for the application and an identifier for a display element affected by the event, such that the agent is instrumented in the application and the display element is a subset of the one or more elements on a display; determining, by the agent, screen content data for the affected display element using the identifier for the affected display element; creating, by the agent, session data for user interactions with the application, where the session data includes the identifier for the application and the screen content data; storing, by the agent, the session data in memory of the mobile device; and reconstructing user interactions with the application using the session data.

The method may further comprise detecting the event using a sensor, where the sensor is instrumented into the application.

The method may comprise detecting, by the agent, a triggering condition occurring on the mobile device; adding, by the agent, data for the trigger condition to the session data; sending, by the agent, the session data over a computer network to a monitoring server, where the session data is sent in response to detecting the triggering condition; and reconstructing the user interactions and the trigger condition at the monitoring server.

Creating session data may comprise creating an event record and a screenshot record for each event, where each event record includes the identifier for the application and a reference to a corresponding screenshot record, and the screenshot record includes the screen content data.

The event record may include an event type, timing data for the event, position of the affected display element and size of the affected display element.

The reference to a corresponding screenshot record may be defined as a hash value from a hash function applied to the screen content data.

Creating session data may comprise determining visibility of the affected display element and storing the session data only when the affected display element is visible on the display.

Determining visibility of the affected display element may include checking visibility status of display elements having an ancestral relationship with the affected display element.

Creating session data may comprise determining whether the affected display element contains private information and excluding the affected display elements containing private information from the session data.

Creating session data may comprise determining whether the affected display element contains private information and storing the session data with a tag when the affected display element contains private information, where the tag indicates that the affected display element contains private information.

Determining whether the affected display element contains private information may include checking whether display elements having an ancestral relationship with the affected display element contain private information.

The method may further comprise reconstructing user interactions with the application by obscuring the screen content data when the tag indicates that the affected display element contains private information.

The triggering condition may further be defined as an undesired operating condition on the mobile device.

Creating the screenshot record for a given event may comprise using the hash value from the screen content data to determine whether a screenshot record with identical hash value is already stored on the mobile device; and, in response to a screenshot record with identical hash value is stored on the device, setting the reference to the corresponding screenshot record of the event record to refer to the already stores screenshot record.

Determining whether the affected display element contains private information may comprise determining for a child display element of the affected display element if the child display element contains private data; and, in response to the child display element containing private data, obscuring the screen content data corresponding to the child display element.

Obscuring the screen content data may comprise suppress capturing of screen content data and, during reconstructing user actions, using position and size of the affected display element to create masking content data.

Reconstructing user interactions may comprise creating a simulation for the mobile device, where the simulation contains a visualization of the display of the mobile device, and using position of the affected display element and size of the affected display element to visualize the screen content data in the visualization of the display of the mobile device.

Reconstructing user interactions may comprise capturing by the agent data describing the mobile device and using the data describing the mobile device to configure the simulation of the mobile device.

A non-transitory computer-readable medium may have computer-executable instructions that, upon execution of the instructions by a processor of a computer, cause the computer to perform: receive an event notification for an event observed by an application executing on a mobile device, where the event notification includes an identifier for the application and an identifier for a display element affected by the event, such that the agent is instrumented in the application and the display element is a subset of the one or more elements on a display; determine screen content data for the affected display element using the identifier for the affected display element; create session data for user interactions with the application, where the session data includes the identifier for the application and the screen content data; store the session data in memory of the mobile device; and reconstruct user interactions with the application using the session data.

In the non-transitory computer-readable medium, the computer-executable instructions may further perform to detecting a triggering condition occurring on the mobile device; add data for the trigger condition to the session data; and send the session data over a computer network to a monitoring server, where the session data is sent in response to detecting the triggering condition.

In the non-transitory computer-readable medium, the computer-executable instructions may perform to determine visibility of the affected display element and store the session data only when the affected display element is visible on the display.

In the non-transitory computer-readable medium, the computer-executable instructions may perform to determine visibility of the affected display element further includes checking visibility status of display elements having an ancestral relationship with the affected display element. In the non-transitory computer-readable medium, the computer-executable instructions may perform to determine whether the affected display element contains private information and excluding the affected display elements containing private information from the session data. In the non-transitory computer-readable medium the computer-executable instructions may perform to determine whether the affected display element contains private information and store the session data with a tag when the affected display element contains private information, where the tag indicates that the affected display element contains private information.

## Claims

1. A computer-implemented method for reconstructing user interactions with an application executing on a mobile device (100), comprising:
- receiving, by an agent (102), an event notification (109) for an event (245) from an operating system of the mobile device (100) observed by an application (101), where the event (245) is indicative of a touch on a display (105) and the event notification (109) includes an identifier (231) for the application (101) and a particular location on the display (105) at which the touch occurred, such that the agent (102) is instrumented in the application;
- mapping, by the agent (102), the particular location on the display (105) to a particular graphical user interface, GUI, element using GUI structure data from the application (101), where the particular GUI element aligns with the touch and the GUI structure data defines layout and location (253) of GUI elements displayable by the application (101);
- determining, by the agent (102), a location on the display to capture a screenshot of the particular GUI element using the layout and location (253) of the particular GUI element from the GUI structure data;
- capturing, by the agent (102), a screenshot of the particular GUI element, where the screenshot is a portion of the display containing the particular GUI element;
- creating, by the agent (102), session data for user interactions with the application (101), where the session data includes the identifier (231) for the application (101), the location (253) of the particular GUI element, and the screenshot;
- storing, by the agent (102), the session data in memory of the mobile device (100); and
- reconstructing user interactions with the application (101) using the session data.

2. The method of claim 1 further comprises
- detecting, by the agent (102), a triggering condition occurring on the mobile device (100);
- adding, by the agent (102), data for the trigger condition to the session data;
- sending, by the agent (102), the session data over a computer network (130) to a monitoring server (140), where the session data is sent in response to detecting the triggering condition; and
- reconstructing the user interactions and the trigger condition at the monitoring server (140).

3. The method of any of the preceding claims wherein creating session data further comprises creating an event record (121, 1107) and a screenshot record (122) for each event (245), where each event record (121, 1107) includes the identifier (231) for the application (101), an event type (221, 251), timing data for the event (245), position of the affected display element, size of the affected display element and a reference (257) to a corresponding screenshot record, and the screenshot record (122) includes the screen content data.

4. The method of claim 3 wherein the reference (257) to a corresponding screenshot record is defined as a hash value from a hash function applied to the screen content data.

5. The method of any of the preceding claims wherein creating session data further comprises determining visibility of the affected display element and storing the session data only when the affected display element is visible on the display (105).

6. The method of claim 5 wherein determining visibility of the affected display element further includes checking visibility status of display elements having an ancestral relationship with the affected display element.

7. The method of any of the preceding claims wherein creating session data further comprises determining whether the affected display element contains private information and excluding the affected display elements containing private information from the session data.

8. The method of any one of the claims 1 to 6 wherein creating session data further comprises determining whether the affected display element contains private information and storing the session data with a tag when the affected display element contains private information, where the tag indicates that the affected display element contains private information.

9. The method of claim 8 wherein determining whether the affected display element contains private information further includes checking whether display elements having an ancestral relationship with the affected display element contain private information.

10. The method of claim 8 or 9 further comprises reconstructing user interactions with the application (101) by obscuring the screen content data when the tag indicates that the affected display element contains private information.

11. The method of claim 2 wherein the triggering condition is further defined as an undesired operating condition on the mobile device (100).

12. The method of claim 4 wherein creating the screenshot record (122) for a given event (245) further comprises using the hash value from the screen content data to determine whether a screenshot record (122) with identical hash value is already stored on the mobile device (100); and, in response to a screenshot record (122) with identical hash value is stored on the device, setting the reference (257) to the corresponding screenshot record of the event record (121, 1107) to refer to the already stores screenshot record (122).

13. The method of claim 10, where obscuring the screen content data further comprises suppress capturing of screen content data and, during reconstructing user actions, using position and size of the affected display element to create masking content data.

14. A non-transitory computer-readable medium having computer-executable instructions that, upon execution of the instructions by a processor of a computer, cause the computer to perform the method of any of the preceding claims.

## Patentansprüche

1. Computerimplementiertes Verfahren zum Rekonstruieren von Benutzerinteraktionen mit einer Anwendung, die auf einer mobilen Vorrichtung (100) ausgeführt wird, umfassend:
- Empfangen, durch einen Agenten (102), einer Ereignisbenachrichtigung (109) für ein Ereignis (245) von einem Betriebssystem der mobilen Vorrichtung (100), das von einer Anwendung (101) beobachtet wird, wobei das Ereignis (245) eine Berührung auf einer Anzeige (105) angibt und die Ereignisbenachrichtigung (109) eine Kennung (231) für die Anwendung (101) und einen bestimmten Ort auf der Anzeige (105), an dem die Berührung aufgetreten ist, beinhaltet, sodass der Agent (102) in der Anwendung instrumentiert ist;
- Zuordnen, durch den Agenten (102), des bestimmten Orts auf der Anzeige (105) zu einem bestimmten grafischen Benutzeroberflächen(GUI)-Element unter Verwendung von GUI-Strukturdaten von der Anwendung (101), wobei das bestimmte GUI-Element mit der Berührung ausgerichtet ist und die GUI-Strukturdaten Layout und Ort (253) von GUI-Elementen definieren, die von der Anwendung (101) anzeigbar sind;
- Bestimmen, durch den Agenten (102), eines Orts auf der Anzeige zum Erfassen eines Screenshots des bestimmten GUI-Elements unter Verwendung des Layouts und Orts (253) des bestimmten GUI-Elements aus den GUI-Strukturdaten;
- Erfassen, durch den Agenten (102), eines Screenshots des bestimmten GUI-Elements, wobei der Screenshot ein Abschnitt der Anzeige ist, der das bestimmte GUI-Element enthält;
- Erzeugen, durch den Agenten (102), von Sitzungsdaten für Benutzerinteraktionen mit der Anwendung (101), wobei die Sitzungsdaten die Kennung (231) für die Anwendung (101), den Ort (253) des bestimmten GUI-Elements und den Screenshot beinhalten;
- Speichern, durch den Agenten (102), der Sitzungsdaten im Speicher der mobilen Vorrichtung (100); und
- Rekonstruieren von Benutzerinteraktionen mit der Anwendung (101) unter Verwendung der Sitzungsdaten.

2. Verfahren nach Anspruch 1, ferner umfassend
- Detektieren, durch den Agenten (102), einer Auslösebedingung, die auf der mobilen Vorrichtung (100) auftritt;
- Hinzufügen, durch den Agenten (102), von Daten für die Auslösebedingung zu den Sitzungsdaten;
- Senden, durch den Agenten (102), der Sitzungsdaten über ein Computernetzwerk (130) an einen Überwachungsserver (140), wobei die Sitzungsdaten als Reaktion auf das Detektieren der Auslösebedingung gesendet werden; und
- Rekonstruieren der Benutzerinteraktionen und der Auslösebedingung beim Überwachungsserver (140).

3. Verfahren nach einem der vorhergehenden Ansprüche, wobei das Erzeugen von Sitzungsdaten ferner das Erzeugen eines Ereignisdatensatzes (121, 1107) und eines Screenshot-Datensatzes (122) für jedes Ereignis (245) umfasst, wobei jeder Ereignisdatensatz (121, 1107) die Kennung (231) für die Anwendung (101), einen Ereignistyp (221, 251), Zeitsteuerungsdaten für das Ereignis (245), die Position des betroffenen Anzeigeelements, die Größe des betroffenen Anzeigeelements und einen Verweis (257) auf einen entsprechenden Screenshot-Datensatz beinhaltet und der Screenshot-Datensatz (122) die Bildschirminhaltsdaten beinhaltet.

4. Verfahren nach Anspruch 3, wobei der Verweis (257) auf einen entsprechenden Screenshot-Datensatz als ein Hash-Wert aus einer Hash-Funktion definiert ist, die auf die Bildschirminhaltsdaten angewendet wird.

5. Verfahren nach einem der vorhergehenden Ansprüche, wobei das Erzeugen von Sitzungsdaten ferner das Bestimmen der Sichtbarkeit des betroffenen Anzeigeelements und das Speichern der Sitzungsdaten nur dann umfasst, wenn das betroffene Anzeigeelement auf der Anzeige (105) sichtbar ist.

6. Verfahren nach Anspruch 5, wobei das Bestimmen der Sichtbarkeit des betroffenen Anzeigeelements ferner das Prüfen des Sichtbarkeitsstatus von Anzeigeelementen beinhaltet, die eine Abstammungsbeziehung zu dem betroffenen Anzeigeelement aufweisen.

7. Verfahren nach einem der vorhergehenden Ansprüche, wobei das Erzeugen von Sitzungsdaten ferner das Bestimmen, ob das betroffene Anzeigeelement private Informationen enthält, und das Ausschließen der betroffenen Anzeigeelemente, die private Informationen enthalten, aus den Sitzungsdaten umfasst.

8. Verfahren nach einem der Ansprüche 1 bis 6, wobei das Erzeugen von Sitzungsdaten ferner das Bestimmen, ob das betroffene Anzeigeelement private Informationen enthält, und das Speichern der Sitzungsdaten mit einem Tag umfasst, wenn das betroffene Anzeigeelement private Informationen enthält, wobei das Tag angibt, dass das betroffene Anzeigeelement private Informationen enthält.

9. Verfahren nach Anspruch 8, wobei das Bestimmen, ob das betroffene Anzeigeelement private Informationen enthält, ferner das Prüfen beinhaltet, ob Anzeigeelemente, die eine Abstammungsbeziehung zu dem betroffenen Anzeigeelement aufweisen, private Informationen enthalten.

10. Verfahren nach Anspruch 8 oder 9, ferner umfassend das Rekonstruieren von Benutzerinteraktionen mit der Anwendung (101) durch Verschleiern der Bildschirminhaltsdaten, wenn das Tag angibt, dass das betroffene Anzeigeelement private Informationen enthält.

11. Verfahren nach Anspruch 2, wobei die Auslösebedingung ferner als eine unerwünschte Betriebsbedingung auf der mobilen Vorrichtung (100) definiert ist.

12. Verfahren nach Anspruch 4, wobei das Erzeugen des Screenshot-Datensatzes (122) für ein gegebenes Ereignis (245) ferner das Verwenden des Hash-Werts aus den Bildschirminhaltsdaten umfasst, um zu bestimmen, ob ein Screenshot-Datensatz (122) mit identischem Hash-Wert bereits auf der mobilen Vorrichtung (100) gespeichert ist; und als Reaktion darauf, dass ein Screenshot-Datensatz (122) mit identischem Hash-Wert auf der Vorrichtung gespeichert ist, das Setzen des Verweises (257) auf den entsprechenden Screenshot-Datensatz des Ereignisdatensatzes (121, 1107), um auf den bereits gespeicherten Screenshot-Datensatz (122) zu verweisen.

13. Verfahren nach Anspruch 10, wobei das Verschleiern der Bildschirminhaltsdaten ferner das Unterdrücken des Erfassens von Bildschirminhaltsdaten und, während des Rekonstruierens von Benutzeraktionen, das Verwenden von Position und Größe des betroffenen Anzeigeelements umfasst, um Maskierungsinhaltsdaten zu erzeugen.

14. Nichtflüchtiges computerlesbares Medium mit computerausführbaren Anweisungen, die bei Ausführung der Anweisungen durch einen Prozessor eines Computers den Computer veranlassen, das Verfahren nach einem der vorhergehenden Ansprüche durchzuführen.

## Revendications

1. Procédé mis en œuvre par ordinateur pour reconstruire des interactions d'utilisateur avec une application exécutée sur un dispositif mobile (100), comprenant :
- la réception, par un agent (102), d'une notification d'événement (109) pour un événement (245) provenant d'un système d'exploitation du dispositif mobile (100) observé par une application (101), l'événement (245) indiquant un toucher sur un écran (105) et la notification d'événement (109) comprenant un identifiant (231) pour l'application (101) et un emplacement particulier sur l'écran (105) au niveau duquel le toucher s'est produit, de sorte que l'agent (102) est instrumenté dans l'application ;
- le mappage, par l'agent (102), de l'emplacement particulier sur l'écran (105) avec un élément d'interface utilisateur graphique particulier, GUI, à l'aide de données de structure GUI provenant de l'application (101), l'élément GUI particulier s'alignant avec le toucher et les données de structure GUI définissant la disposition et l'emplacement (253) des éléments GUI pouvant être affichés par l'application (101) ;
- la détermination, par l'agent (102), d'un emplacement sur l'écran pour capturer une capture d'écran de l'élément GUI particulier au moyen de la disposition et de l'emplacement (253) de l'élément GUI particulier provenant des données de structure GUI ;
- la capture, par l'agent (102), d'une capture d'écran de l'élément GUI particulier, la capture d'écran étant une partie de l'affichage contenant l'élément GUI particulier ;
- la création, par l'agent (102), de données de session pour les interactions de l'utilisateur avec l'application (101), les données de session comprenant l'identifiant (231) de l'application (101), l'emplacement (253) de l'élément GUI particulier et la capture d'écran ;
- le stockage, par l'agent (102), des données de session dans la mémoire du dispositif mobile (100) ; et
- la reconstruction des interactions de l'utilisateur avec l'application (101) à l'aide des données de session.

2. Procédé selon la revendication 1 comprenant en outre
- la détection, par l'agent (102), d'une condition de déclenchement apparaissant sur le dispositif mobile (100) ;
- l'ajout, par l'agent (102), de données pour la condition de déclenchement aux données de session ;
- l'envoi, par l'agent (102), des données de session sur un réseau informatique (130) à un serveur de surveillance (140) où les données de session sont envoyées en réponse à la détection de la condition de déclenchement ; et
- la reconstruction des interactions d'utilisateur et de la condition de déclenchement au niveau du serveur de surveillance (140).

3. Procédé selon l'une quelconque des revendications précédentes, dans lequel la création de données de session comprend en outre la création d'un enregistrement d'événement (121, 1107) et d'un enregistrement de capture d'écran (122) pour chaque événement (245), chaque enregistrement d'événement (121, 1107) comprenant l'identifiant (231) pour l'application (101), un type d'événement (221, 251), des données de synchronisation pour l'événement (245), la position de l'élément d'affichage affecté, la taille de l'élément d'affichage affecté et une référence (257) à un enregistrement de capture d'écran correspondant, et l'enregistrement de capture d'écran (122) comprenant les données de contenu d'écran.

4. Procédé selon la revendication 3, dans lequel la référence (257) à un enregistrement de capture d'écran correspondant est définie comme une valeur de hachage provenant d'une fonction de hachage appliquée aux données de contenu d'écran.

5. Procédé selon l'une quelconque des revendications précédentes, dans lequel la création de données de session comprend en outre la détermination de la visibilité de l'élément d'affichage affecté et le stockage des données de session uniquement lorsque l'élément d'affichage affecté est visible sur l'écran (105).

6. Procédé selon la revendication 5, dans lequel la détermination de la visibilité de l'élément d'affichage affecté comprend en outre la vérification de l'état de visibilité des éléments d'affichage ayant une relation ancestrale avec l'élément d'affichage affecté.

7. Procédé selon l'une quelconque des revendications précédentes, dans lequel la création de données de session comprend en outre la détermination si l'élément d'affichage affecté contient des informations privées et l'exclusion des éléments d'affichage affectés contenant des informations privées des données de session.

8. Procédé selon l'une quelconque des revendications 1 à 6, dans lequel la création de données de session comprend en outre la détermination si l'élément d'affichage affecté contient des informations privées et le stockage des données de session avec une étiquette lorsque l'élément d'affichage affecté contient des informations privées, l'étiquette indiquant que l'élément d'affichage affecté contient des informations privées.

9. Procédé selon la revendication 8, dans lequel la détermination si l'élément d'affichage affecté contient des informations privées comprend en outre la vérification si les éléments d'affichage ayant une relation ancestrale avec l'élément d'affichage affecté contiennent des informations privées.

10. Procédé selon la revendication 8 ou 9, comprenant en outre la reconstruction des interactions de l'utilisateur avec l'application (101) en masquant les données de contenu d'écran lorsque l'étiquette indique que l'élément d'affichage affecté contient des informations privées.

11. Procédé selon la revendication 2, dans lequel la condition de déclenchement est en outre définie comme une condition de fonctionnement indésirable sur le dispositif mobile (100).

12. Procédé selon la revendication 4, dans lequel la création de l'enregistrement de capture d'écran (122) pour un événement donné (245) comprend en outre l'utilisation de la valeur de hachage à partir des données de contenu d'écran pour déterminer si un enregistrement de capture d'écran (122) avec une valeur de hachage identique est déjà stocké sur le dispositif mobile (100) ; et, en réponse à un enregistrement de capture d'écran (122) avec une valeur de hachage identique stockée sur le dispositif, la définition de la référence (257) à l'enregistrement de capture d'écran correspondant de l'enregistrement d'événement (121, 1107) pour faire référence à l'enregistrement de capture d'écran déjà stocké (122).

13. Procédé selon la revendication 10, dans lequel le masquage des données de contenu d'écran comprend en outre la suppression de la capture des données de contenu d'écran et, pendant la reconstruction des actions de l'utilisateur, l'utilisation de la position et de la taille de l'élément d'affichage affecté pour créer des données de contenu de masquage.

14. Support non transitoire lisible par ordinateur comportant des instructions exécutables par ordinateur qui, lors de l'exécution des instructions par un processeur d'un ordinateur, amènent l'ordinateur à exécuter le procédé selon l'une quelconque des revendications précédentes.
